(19) Europäisches Patentamt
European Patent Office
Office européen des brevets

(11) Publication number: **0 185 733 B1**

# (12) EUROPEAN PATENT SPECIFICATION

(45) Date of publication of patent specification: **08.03.89**

(51) Int. Cl.$^4$: **H 04 N 9/07**

(21) Application number: **85903123.9**

(22) Date of filing: **06.06.85**

(86) International application number: **PCT/US85/01048**

(87) International publication number: **WO 86/00484 16.01.86 Gazette 86/02**

## (54) APPARATUS FOR PRODUCING A COLOR IMAGE SIGNAL.

(30) Priority: **18.06.84 US 621348**

(43) Date of publication of application: **02.07.86 Bulletin 86/27**

(45) Publication of the grant of the patent: **08.03.89 Bulletin 89/10**

(84) Designated Contracting States: **DE FR GB NL**

(56) References cited:
**US-A-3 784 734**
**US-A-3 971 065**
**US-A-4 227 208**

(73) Proprietor: **EASTMAN KODAK COMPANY**
**343 State Street**
**Rochester New York 14650 (US)**

(72) Inventor: **LANGWORTHY, Harold, Frederick**
**732 Hightower Way**
**Webster, NY 14580 (US)**

(74) Representative: **Parent, Yves**
**Kodak-Pathé Département Brevets et Licences**
**Centre de Recherches et de Technologie Zone Industrielle**
**F-71102 Chalon-sur-Saône Cédex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 185 733 B1

Courier Press, Leamington Spa, England.

**Description**

BACKGROUND OF THE INVENTION

1. Field of the Invention

The present invention relates to apparatus for producing a color image signal having first and second color components of the type having a regular array of first and second colored filter elements registered on an image sensing device.

2. Discussion Relative to the Prior Art

Fig. 1 shows apparatus for producing a color image signal that is exemplary of the prior art. For example, see "CCD Digital Color Camera" by Nagumo et al, IEEE Transactions on Consumer Electronics, August, 1980 Vol. CE—26, No. 3, page 339. An image, formed by lens 10, is separated into a green (luminance) component and a red/blue (chrominance) component by a dichroic mirror 12 positioned between a pair of prism blocks 14 and 16. The green image component is passed by dichroic mirror 12 and falls on a solid state image sensor 18, for example a charge coupled device (CCD) image sensor. The output of solid state image sensor 18 is amplified by an amplifier 17 and sampled by a sample and hold circuit 19 to produce a signal $G_S$ representing the green component of the image. The red/blue component of the image is reflected by dichroic mirror 12 and prism block 14 and falls on a solid state image sensor 20.

The solid state image sensor 20 is provided with a regular array of first and second colored filter elements (for example, a striped filter 22 as partially shown in Fig. 2) having alternate red and blue filter elements to separate the red/blue component of the image into a red chrominance component and blue chrominance component. The word "regular" means that the color filter elements occur at uniform spacings in the array. The filter array is registered on the solid state image sensor 20 so that the filter elements are aligned with the columns of image sensing elements on the image sensor. The word "registered" means that the filter array is physically attached to the surface of the sensor, or that the image of the filter array is optically projected onto the surface of the image sensor.

The output of solid state image sensor 20 is amplified by amplifier 28 and sampled by sample and hold circuits 30 and 32, to provide a signal R representing the red chrominance component of the image, and a signal $B_S$ representing the blue chrominance component of the image.

The response of the prior art solid state image sensor 20, with color filter array 22, to a component of scene detail, for example a vertical white stripe on a dark background, is illustrated schematically in Fig. 3. The line labeled W in Fig. 3 represents the brightness profile of a vertical white stripe falling across a horizontal line of image sensing elements in the solid state image sensor 20. The vertical columns labeled "RBRB ..." in Fig. 3 represent the red and blue filter elements registered on alternate image sensing elements in the solid state image sensor. The line labeled $R_S$ in Fig. 3 is the signal representing the sampled red chrominance component of the white striped image, and the line labeled $B_S$ is the signal representing the sampled blue chrominance component of the image. As can be seen in Fig. 3, the $R_S$ and $B_S$ signals have different amplitudes in areas where the brightness of the image is changing, i.e. at the edges of the white stripe. This results from the fact that each of the red and blue chrominance signals is sampled only one time every two filter elements and that two adjacent elements receive substantially different quantities of light in areas of image changing. The areas where the signals differ have been indicated by the cross-hatched regions as the one labeled 34 in Fig. 3. When the color image signal is displayed, the differences in the red and blue chrominance components of the signal at the edges of the stripe causes undesirable color fringing to appear in the image.

The object of the present invention is to provide apparatus for producing a color image signal having first and second color components, of the type having an image sensor with a regular array of first and second colored filter elements registered thereon, that produces a color image signal free from such color fringing.

SUMMARY OF THE INVENTION

The apparatus according to the invention is characterized by having an optical device for displacing, in space, a first color component of the color image with respect to a second color component by an amount equal to the spacing of correspondingly colored filter elements in the array, to cause neighboring differently colored filter elements to receive light from the same part of the image, and a delay device for displacing, in time, the first color component of the color image signal produced by the image sensing device with respect to the second color component by an amount sufficient to compensate for the spatial displacement effected by the optical device.

According to one mode of practicing the invention, the optical device comprises a pair of spaced apart dichroic filters positioned in the optical path of the apparatus between an objective lens and the image sensor. According to another mode of practicing the invention, the optical device comprises a color separation grating. According to a further mode of the invention, the optical device comprises a blazed diffraction grating.

In one mode of practicing the invention with an image sensor having three colors of filter elements, the optical device comprises three mirrors spaced apart from each other for relatively displacing a three color component of the image by an amount equal to the spacing of the three colored filter elements on the array. In this mode, the delay device includes means for displacing in time the second and third color components of the signal to compensate for the spatial displacement effected by the optical device.

BRIEF DESCRIPTION OF THE DRAWINGS

Fig. 1 is a schematic diagram representative of prior art apparatus for producing a color image signal;

Fig. 2 is a partial detail view showing a color filter array pattern employed with the apparatus shown in Fig. 1;

Fig. 3 is a diagram useful for explaining the operation of the apparatus shown in Fig. 1;

Fig. 4 is a schematic diagram showing apparatus embodying the present invention;

Fig. 5 is a partial detail view showing a color filter array pattern employed with the apparatus shown in Fig. 4;

Fig. 6 is a diagram useful in describing the operation of the apparatus shown in Fig. 4;

Fig. 7 is a schematic diagram illustrating another example of the present invention employed in apparatus having a three color image sensing device;

Fig. 8 is a partial detail view showing a color filter array pattern employed with the apparatus shown in Fig. 7;

Fig. 9 is a schematic diagram showing another example of the present invention employed in apparatus for producing a color image signal;

Fig. 10 is a partial detail view showing a color filter array pattern used with the apparatus shown in Fig. 9;

Fig. 11 is a schematic diagram showing another example of the present invention employed in apparatus for producing a color image signal;

Fig. 12 is a schematic diagram showing another example of apparatus employing the present invention;

Fig. 13 is a schematic diagram showing another example of apparatus employing the present invention having an image sensing device with a color filter array having a checkerboard type pattern; and

Fig. 14 is a partial detail view showing the checkerboard filter array pattern used with the apparatus shown in Fig. 13.

MODES OF CARRYING OUT THE INVENTION

Fig. 4 illustrates an example of this invention employed in apparatus for producing a color image, of the type shown in Fig. 1. Similar elements in the apparatus are numbered the same. An optical device comprising a pair of spaced apart dichroic mirrors 40 and 42 separates the image into a green (luminance) component that is transmitted to solid state image sensing device 18 and red and blue (chrominance) components that are reflected to solid state image sensing device 20 which is provided with a color filter array 22, partially shown in Fig. 5. Dichroic mirror 40 reflects the red component of light and transmits blue and green components. Dichroic mirror 42 reflects the blue component of light and transmits the green component. Dichroic mirrors 40 and 42 are spaced apart by spacers 44. The spacing is sufficient to displace, in space, the red component of the image with respect to the blue component by an amount equal to the spacing of the red and blue color filter elements in the color filter array 22. As a result, the filter elements in adjacent pairs of neighboring red and blue filter elements (indicated by brackets in Fig. 5) receive light from the same part of the image.

In the output circuitry for the solid state image sensing device 20, an electronic device, comprising a one-element time delay 46, displaces, in time, the signal representing the red component of the image by an amount sufficient to compensate for the spatial displacement effected by the spaced-apart dichroic mirrors 40 and 42. Fig. 6 shows the chrominance signals $R_S$ and $B_S$, produced by the image sensing apparatus when viewing a vertical white stripe on a dark background. As indicated in Fig. 6 by vertical columns labeled

$$\begin{matrix} B, \\ R \end{matrix}$$

neighbouring pairs of samples of the blue component and the red component of the image are taken from the same part of the image. After the displacement in time to compensate for the spatial displacement, the $R_S$ and $B_S$ signals are identical. As can be seen from Fig. 6, the present invention is advantageous in that the color fringes in the chrominance signal in areas of the image where brightness is changing, are eliminated.

Fig. 7 shows apparatus having a single image sensing device 20 with a three-color stripe filter 22 (a portion of which is shown in Fig. 8). The principles of the present invention are applied in this embodiment to cause three neighboring filter elements (red (R), green (G) and blue (B)) to receive light from the same part of the image.

In the embodiment shown in Fig. 7, three spaced apart mirrors 50, 52 and 54 are employed to shift the three color components of the image with respect to each other. The first mirror 50 is a dichroic mirror that reflects the green component of light and passes the red and blue components. The second mirror 52 is a dichroic mirror that reflects the blue component of the light and passes the red component. The third mirror 54 is a fully silvered mirror that reflects the red component of light to the image sensor. The mirrors are spaced apart such that the red component of the image is displaced with respect to the green component by the width of two filter stripes. The blue component of the image is displaced with respect to the green component by the width of one filter stripe. The arrows in Fig. 8 indicate the relative shifts between the color components of the image, that are effected by the arrangement of mirrors 50, 52, and 54.

In Fig. 7, and in the examples to follow, only the reflective surfaces (mirrors 50, 52, 54, etc.) are shown. It is to be understood that these surfaces are supported by the faces of prisms as in Fig. 4, or by the surfaces of transparent sheets. In the output electronics of the apparatus, the signal representing the blue component of the image is

electronically delayed in time by one picture element by a time delay element 56, to compensate for the spatial displacement effected by the mirrors. The signal representing the red component of the image is delayed by two picture elements by time delay elements 58 and 60 to compensate for the spatial displacement effected by the mirrors. The embodiment of the invention shown in Fig. 7 is advantageous in that the output of the apparatus is free from color fringing in all three colors.

Fig. 9 shows apparatus having a single image sensing device 20 with a color filter array 22 (partially shown in Fig. 10) of the type having a green filter stripe over alternate columns of the image sensor, interspersed with red and blue filter stripes. In this embodiment, mirror 54 is displaced farther away from mirror 52 than in the embodiment shown in Fig. 7 so as to shift the red color component of the image by the width of three filter stripes, as shown by the arrows in Fig. 10. The signal representing the red component of the image is electronically shifted in time by three picture element delays 58, 60 and 62 to compensate for the spatial shift effected by the mirrors.

In the examples discussed above, the optical device for shifting the color components of the image with respect to each other was positioned between an objective lens 10 and the image sensing device 20. Fig. 11 shows apparatus having a relay lens 64 and an objective lens 10. The optical device for effecting the shift between color components comprises dichroic mirrors 66 and 68 positioned between the relay lens 64 and the objective lens 10, and angled with respect to each other to effect the shift of one color component with respect to the other.

Fig. 12 illustrates another optical device for effecting the shift of one color component with respect to another. In this example, a dichroic mirror 12 separates the image into a green component that is passed to image sensing device 18, and a blue/red component that is passed to an image sensing device 20. The image sensing device 20 is provided with red and blue vertical color filter array of the type shown in Fig. 5.

The blue and red components of the image are displaced with respect to each other by a color separation grating 70. The color separation grating is of the type comprising a blazed synthetic phase-only hologram that separates the incoming light into three central diffraction orders (−1, 0, and +1). Blue light is selectively diffracted into the −1 order and red light is selectively diffracted into the +1 order, thereby effecting the color displacements. A theoretical analysis of such color separation gratings is given in the article "Color Separation Gratings" by H. Damman in *Applied Optics*, Vol. 17, No. 15, August 1, 1978, page 2273.

The principles of the present invention can also be employed with an image sensing device having a color filter array with a checkerboard pattern of colored filter elements, where the color of the filter elements alternates in two dimensions.

Fig. 13 shows a color apparatus having a solid state image sensing device 20 with a checkerboard type color filter array 22 registered thereon. A portion of the color filter array 22 is shown in Fig. 14. As seen from Fig. 14, the colors of the filter elements in the array alternate in two dimensions, vertically and horizontally. The green filter elements are arranged in quincunx while the red and blue filter elements are imbricated with the green elements according to respective subarrays of rows and columns. The optical device shifts the red color component of the image with respect to the green component in a vertical direction, and shifts the blue component of the image with respect to the red and green components in a horizontal direction.

To accomplish the color component spatial shifts in two dimensions, a first dichroic mirror 72 positioned at an angle to the optical path, reflects red and green light and passes blue light. A mirror 74 parallel to and spaced from the dichroic mirror 72 reflects the blue light and shifts the blue component of the image with respect to the red and green components. A second dichroic mirror 76 positioned at an angle to the optical path and rotated 90° from the first set of mirrors, reflects red light and passes blue and green light. A mirror 78 parallel to and spaced from the dichroic mirror 76 reflects the blue and green light passed by dichroic mirror 76 to effect a displacement between the red component of the image and the green and blue components.

The signal representing the red component of the image is electrically delayed by one line scan time $\Delta$ by an electronic delay device 80, and the signal representing the blue component is delayed by one sensor element time $\delta$ by electronic delay device 82 to compensate for the spatial displacements effected by the mirrors. The apparatus is advantageous in that the resulting color signal produced by the apparatus is free from color fringing caused by the spacing of the color filters in the filter array.

## Claims

1. Apparatus for producing a color image signal having at least first and second color components, including an image sensor and a regular array of first and second colored filter elements registered thereon for producing the color image signal characterized by:

an optical device for displacing, in space, the first color component of said image with respect to the second color component by an amount equal to the spacing between neighboring first and second colored filter elements in the array, to cause neighboring differently colored filter elements to receive light from the same portion of the image; and

a delay device for displacing, in time, the first color component of the signal with respect to the second color component by an amount sufficient to compensate for the spatial displacement effected by the optical device.

2. Apparatus as claimed in Claim 1, wherein said optical device comprises parallel, spaced-apart, dichroic mirrors positioned between an objective lens and said array of color filter elements in said apparatus.

3. Apparatus as claimed in Claim 1, further comprising a relay lens positioned in front of an objective lens, and wherein said optical device comprises spaced-apart, dichroic mirrors, slightly angled with respect to each other, positioned between said relay lens and said objective lens in said apparatus.

4. Apparatus as claimed in Claim 1, wherein said optical device comprises a blazed diffraction grating.

5. Apparatus for producing a color image signal having first, second and third color components, including an image sensor and a checkerboard array, extending in vertical and horizontal directions, of first, second and third imbricated subarrays of filter elements, the first and second subarrays showing a regular line and column pattern of elements and the third a quincunx pattern of elements, the filter elements being registered with the image sensor which is read out with a line scan time Δ and a sensor element time δ for producing the color image signal, the apparatus being characterized by:

an optical device for displacing vertically the first color component of said image with respect to the third color component and for displacing horizontally the second color component with respect to the first and third components so as to cause neighboring differently colored filter elements to receive light from the same portion of the image, and

first and second delay devices for respectively displacing, in time, the first color component of the signal by one line scan time Δ and the second color component by one sensor element time δ.

6. Apparatus as claimed in Claim 5, wherein said optical device comprises two orthogonal pairs of parallel, spaced-apart, dichroic mirrors positioned between an objective lens and said array of color filter elements.

**Patentansprüche**

1. Vorrichtung zum Erzeugen eines Farbbildsignals mit mindestens einer ersten und einer zweiten Farbkomponente, wobei in dieser Vorrichtung ein Bildsensor sowie ein regelmäßige Anordnung von ersten und zweiten Farbfilterelementen vorgesehen sind, die zur Erzeugung des Farbbildsignals paßgenau auf dem Bildsensor angeordnet sind, gekennzeichnet durch

eine optische Vorrichtung, mit der die erste Farbkomponente des Bildes gegenüber der zweiten Farbkomponente räumlich um einen Betrag verschoben wird, der dem Abstand zwischen jeweils benachbarten ersten und zweiten Farbfilterelementen der Anordnung entspricht, so daß Licht von demselben Bildabschnitt auf benachbarte unterschiedlich gefärbte Filterelemente, fällt, und

eine Verzögerungsvorrichtung, mit der die erste Farbkomponente des Farbbildsignals gegenüber der zweiten Farbkomponente zeitlich um einen Betrag verschoben wird, der ausreicht, um die von der optischen Vorrichtung bewirkte räumliche Verschiebung auszugleichen.

2. Vorrichtung nach Anspruch 1, dadurch gekennzeichnet, daß die optische Vorrichtung parallel im Abstand voneinander liegende dichroitische Spiegel aufweist, die zwischen einem Objektiv und der Anordnung der Farbfilterelemente in der Vorrichtung vorgesehen sind.

3. Vorrichtung nach Anspruch 1, dadurch gekennzeichnet, daß vor dem Objektiv eine Übertragungslinse angeordnet ist und daß die optische Vorrichtung im Abstand voneinander liegende, leicht zueinander geneigte dichroitische Spiegel aufweist, die zwischen der Übertragungslinse und dem Objektiv in der Vorrichtung angeordnet sind.

4. Vorrichtung nach Anspruch 1, dadurch gekennzeichnet, daß die optische Vorrichtung ein Beugungsgitter mit einem Bereich maximaler Intensität aufweist.

5. Vorrichtung zum Erzeugen eines Farbbildsignals mit einer ersten, zweiten und dritten Farbkomponente, wobei in der Vorrichtung ein Bildsensor und eine schachbrettartige Anordnung von senkrecht und waagerecht verlaufenden ziegeldachartig angeordneten Untergruppierungen von Filterelementen vorgesehen sind, wobei die erste und zweite Untergruppierung ein regelmäßiges Muster aus waagerechten Zeilen bzw. senkrechten Reihen bildet und die dritte in einem Schachbrettmuster erscheint und wobei die Filterelemente paßgenau auf dem Bildsensor angeordnet sind, der zum Erzeugen des Farbbildsignals mit einer Zeilenabtastzeit Δ und einer Sensorzeit δ ausgelesen wird, gekennzeichnet durch

eine optische Vorrichtung, mit der die erste Farbkomponente des Bildes gegenüber der dritten Farbkomponente senkrecht verschoben wird und die zweite Farbkomponente gegenüber der ersten und dritten Farbkomponente waagerecht verschoben wird, so daß Licht von demselben Bildabschnitt aus benachbarte unterschiedlich gefärbte Filterelemente fällt, und

eine erste und zweite Verzögerungsvorrichtung, die die erste Farbkomponente des Signals um eine Zeilenabtastzeiteinheit Δ bzw. die zweite Farbkomponente um eine Sensorzeiteinheit δ zeitlich verschieben.

6. Vorrichtung nach Anspruch 5, dadurch gekennzeichnet, daß die optische Vorrichtung zwei orthogonale Paare von parallel im Abstand voneinander verlaufenden dichroitischen Spiegeln aufweist, die zwischen einem Objektiv und der Anordnung von Farbfilterelementen angeordnet sind.

**Revendications**

1. Appareil pour produire un signal image de couleur présentant au moins une première et une

seconde composante spectrale, appareil comprenant en repérage l'un par rapport à l'autre, un capteur image et un ensemble filtrant muni d'éléments de filtres présentant une première et une seconde couleur et disposés régulièrement pour produire le signal image de couleur et caractérisé en ce qu'il comprend:

un dispositif optique pour décaler, spatialement, la première composante spectrale de ladite image par rapport à la seconde composante spectrale d'une quantité égale à l'espace compris entre les éléments de filtres voisins qui constituent l'ensemble filtrant et qui présentent une couleur différente de manière que ces éléments de filtre reçoivent la lumière provenant de la même partie de l'image; et

un dispositif de temporisation pour décaler, temporellement, la première composante spectrale du signal par rapport à la seconde composante spectrale d'une quantité suffisante pour compenser le décalage spatial réalisé par le dispositif optique.

2. Appareil selon la revendication 1, dans lequel le dispositif optique comprend des miroirs dichroiques séparés et parallèles situés entre un objectif et ledit ensemble filtrant de l'appareil.

3. Appareil selon la revendication 1, comprenant aussi une lentille avant séparée d'un objectif, et dans lequel le dispositif optique comprend des miroirs dichroiques séparés, légèrement inclinés l'un par rapport à l'autre, et situés entre la lentille avant et l'objectif.

4. Appareil selon la revendication 1, dans lequel le dispositif optique comprend un réseau de diffraction à angle de blaz.e

5. Appareil pour produire un signal image coloré présentant une première, une deuxième et une troisième composante spectrale, appareil comprenant un capteur image et un ensemble filtrant en damier, s'étendant dans des directions verticales et horizontales et constitué d'un premier, d'un deuxième et d'un troisième sous-ensemble filtrant, le premier et le second sous-ensemble preśsentant un motif régulier d'éléments de filtre suivant les lignes et les colonnes et le troisième sous-ensemble présentant un motif d'éléments de filtre en quinconce, les éléments de filtre étant en repérage par rapport au capteur image qui est lu avec une temporisation ligne Δ et une temporisation élément δ de manière à produire le signal image coloré, appareil caractérisé en ce qu'il comprend:

un dispositif optique pour décaler verticalement la première composante spectrale de l'image par rapport à la troisième composante spectrale et horizontalement la deuxième composante spectrale de l'image par rapport à la première et à la troisième composante de manière à ce que des éléments de filtre voisins qui présentent des couleurs différents reçoivent la lumière d'une même partie de l'image; et

des dispositifs de temporisation pour décaler temporellement la première composante spectrale d'une quantité correspondant à une temporisation ligne Δ et la seconde composante spectrale d'une quantité correspondant à une temporisation élément δ.

6. Appareil selon la revendication 5, dans lequel le dispositif optique comprend deux paires orthogonales de miroirs dichroiques espacés et parallèles entre eux situés entre l'objectif et l'ensemble filtrant dudit appareil.

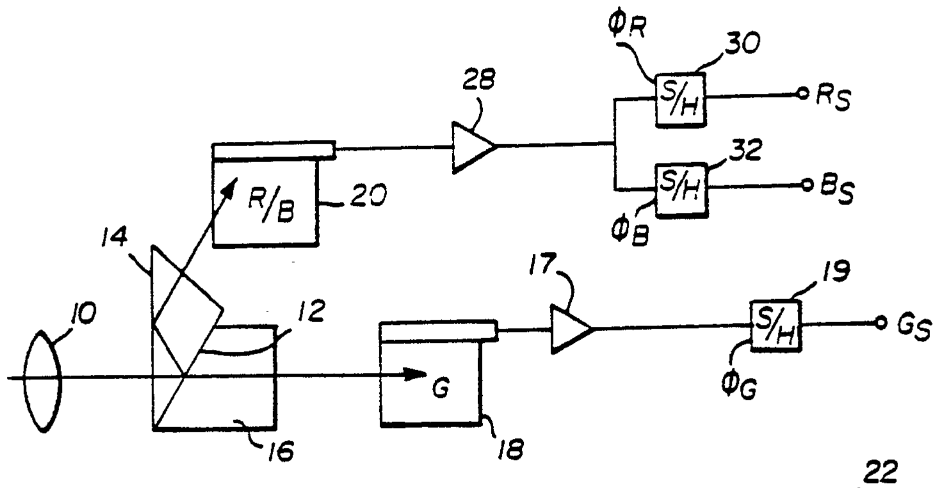


FIG. 1
(prior art)

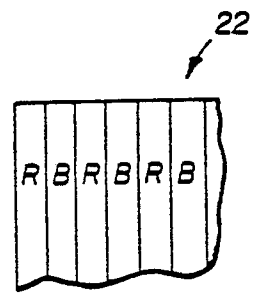


FIG. 2
(prior art)

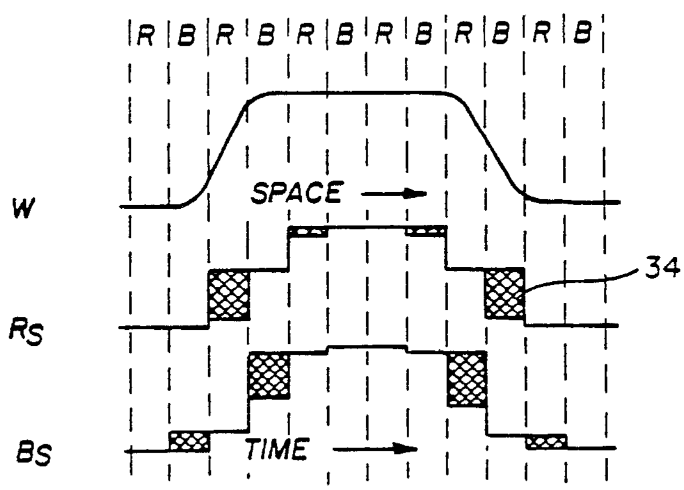


FIG. 3
(prior art)

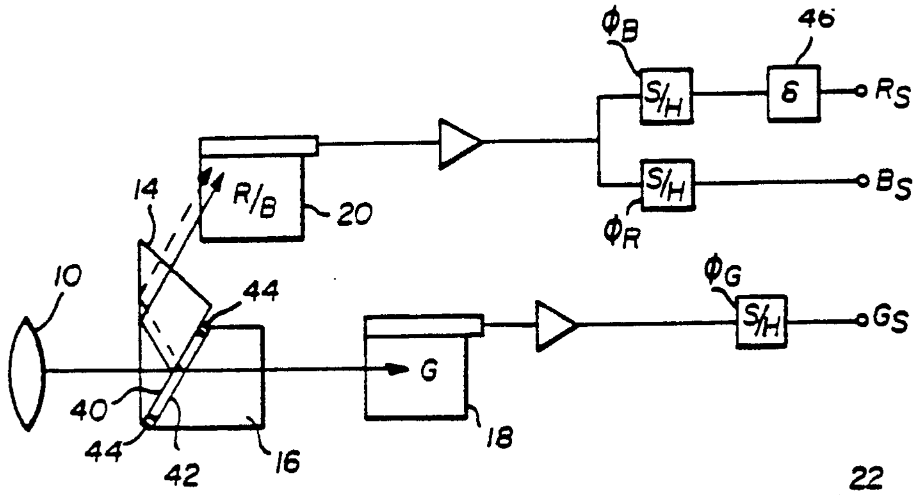


FIG. 4

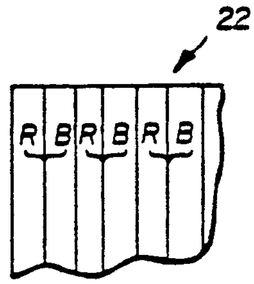


FIG. 5

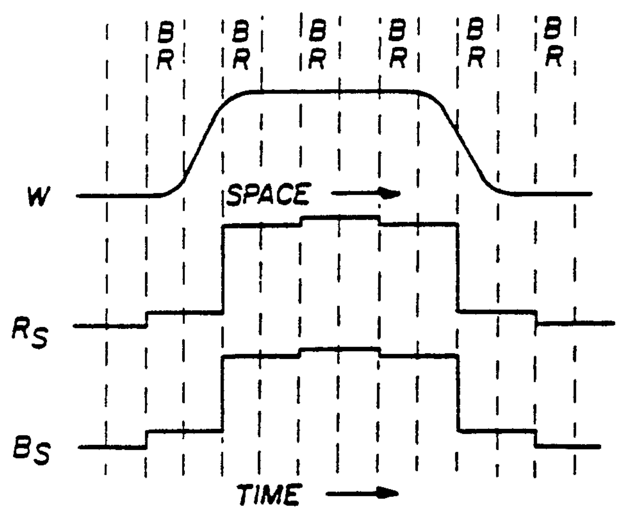


FIG. 6

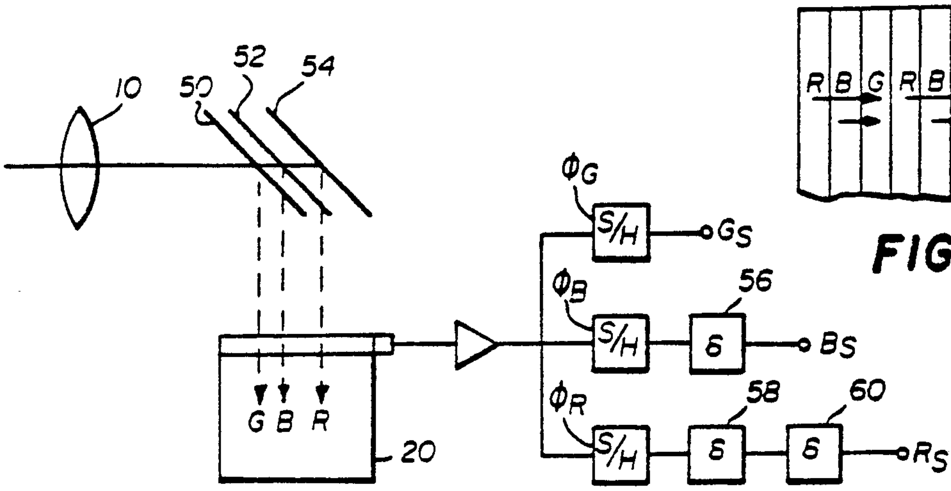


FIG. 7

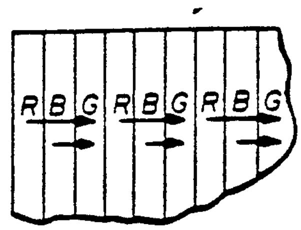


FIG. 8

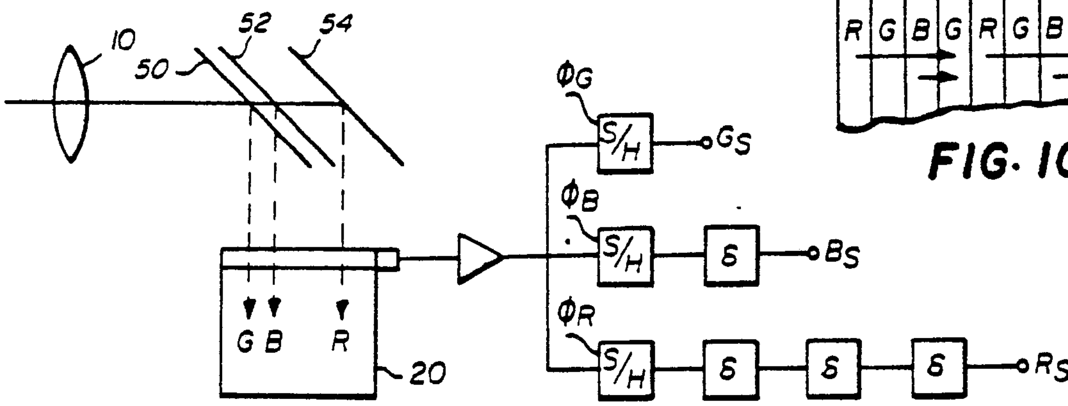


FIG. 9

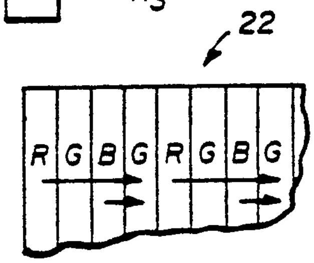


FIG. 10

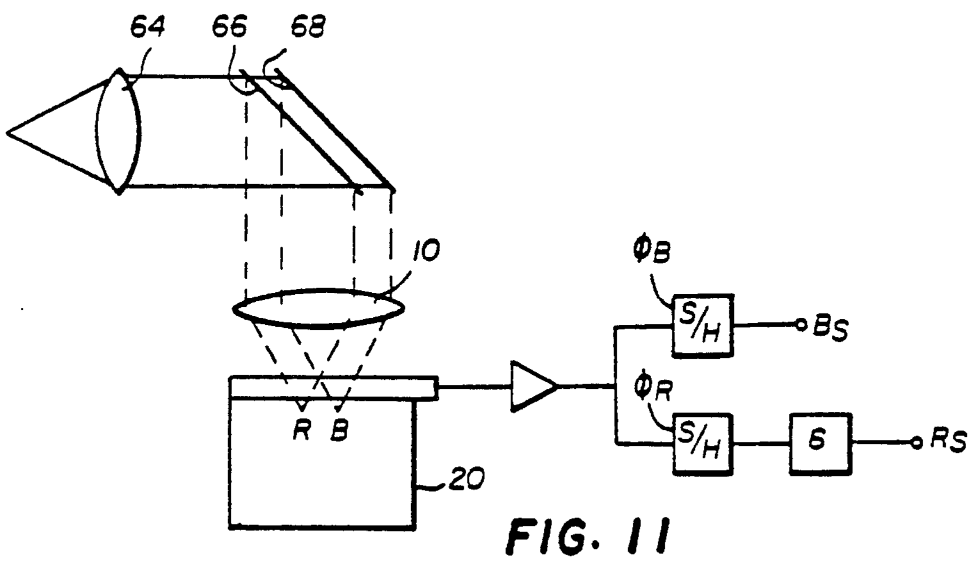


FIG. 11

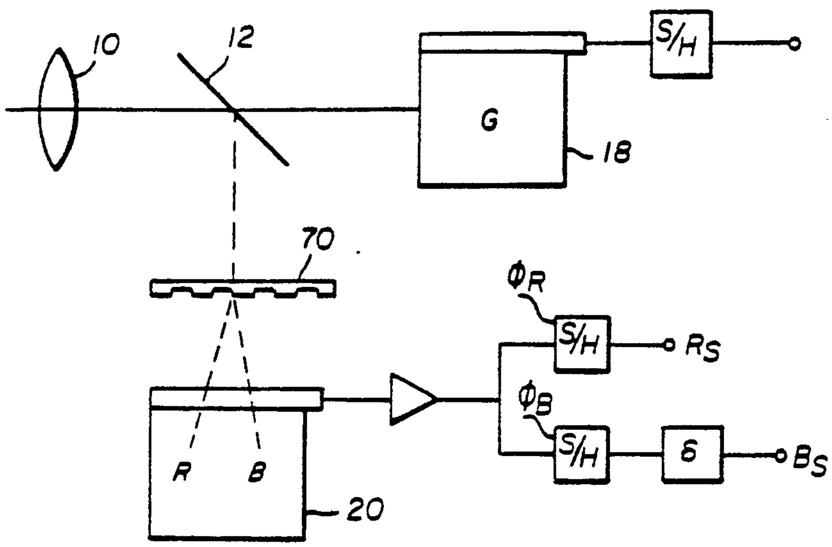


FIG. 12

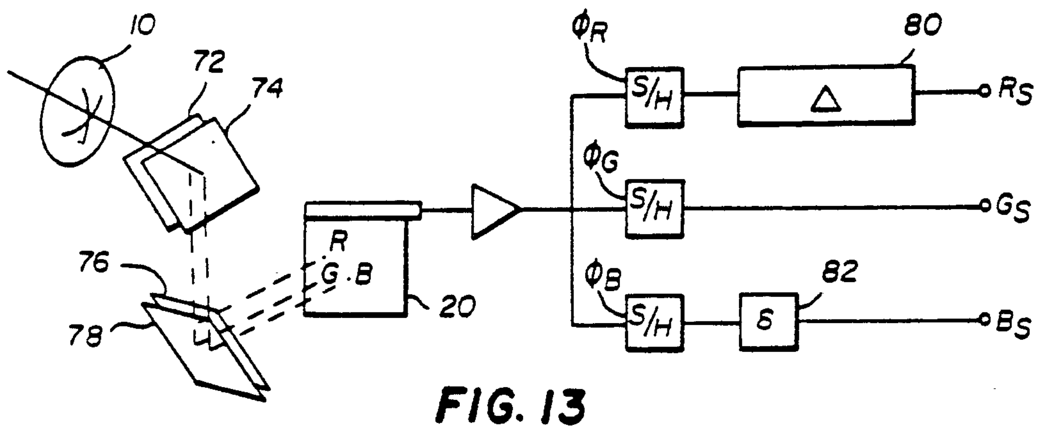


FIG. 13

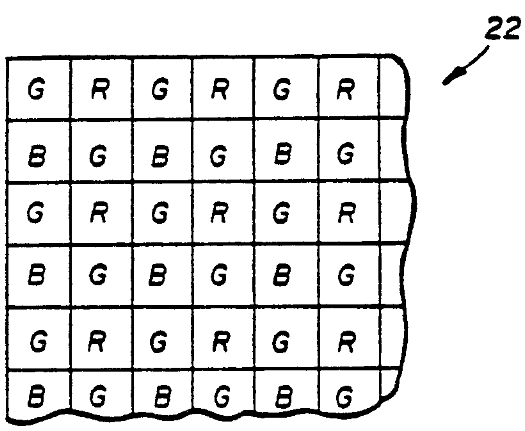


FIG. 14